# DEMANDE DE BREVET EUROPEEN

(11) **EP 1 449 696 A1**
(43) Date de publication de la demande: **25.08.2004**
(21) Numéro de dépôt: 04364012.7
(22) Date de dépôt: 10.02.2004
(51) Int. Cl.: B60J 1/20

(54) **Joint de finition pour rail de store de véhicule automobile, ensemble de store et véhicule correspondants**

(30) Priorité: 13.02.2003 FR 0302005
(71) Demandeur: WAGON SAS, 79300 Bressuire (FR)
(72) Inventeur: Moreau, Stéphane, 49300 Le Puy Saint Bonnet (FR)
(74) Mandataire: Bioret, Ludovic

(57) **Abrégé**

L'invention concerne un joint de finition pour rail (31) de store pour véhicule automobile, comprenant au moins une lèvre (36) souple venant fermer au moins en partie une ouverture d'un premier logement dudit rail, dans lequel circule au moins un élément solidaire d'une barre de tirage (13) dudit store.

## Description

Le domaine de l'invention est celui des stores, notamment pour véhicule automobile. Plus précisément, l'invention concerne les stores à écran amovible, destiné à être déployé pour occulter une baie non rectangulaire, et circulant dans une fente, ménagée par exemple dans la tablette arrière d'un véhicule, ou dans un boîtier prévu à cet effet.

L'invention concerne notamment les stores à enrouleur, mais d'autres modes de repliement de la toile peuvent, bien sûr, être mis en oeuvre (tels que par exemple un repliement de la toile suivant des plis préformés).

Classiquement, un store à enrouleur présente une toile, ou rideau, formant écran, en position déployée, devant une baie vitrée. La toile est susceptible d'être déroulée ou enroulée au travers d'une fente ménagée dans l'habillage intérieur ou la tablette arrière d'un véhicule.

Une des extrémités de la toile est montée sur un rouleau, ou tube enrouleur, mobile en rotation. L'autre extrémité de la toile est munie d'une barre de tirage.

Selon une technique particulière, à laquelle s'applique l'invention, la barre de tirage est solidaire de deux patins reliés ou montés à ses extrémités, et qui circulent dans des rails pour guider la barre de tirage, et par conséquent la toile d'occultation, entre sa position déployée et sa position repliée. Ce déplacement peut être manuel ou motorisé.

Pour cela, le véhicule automobile doit bien sûr être équipé de rails qui assureront le guidage et le maintien des patins (et plus généralement de tout élément susceptible de coulisser dans un rail, tel que par exemple des roulettes).

Un inconvénient de cette technique est qu'au moins une portion des rails est visible, et fait parfois saillie, ce qui est peu acceptable dans les véhicules modernes, et notamment de haute gamme, tant pour des raisons d'esthétique que d'ergonomie.

Par ailleurs, l'existence de jeux dans le montage du véhicule peut laisser apparaître des espaces inesthétiques, notamment au voisinage des extrémités des rails (et par exemple, pour un store de tablette arrière, au voisinage de la tablette arrière d'une part, et du pavillon d'autre part). A nouveau, cela n'est pas acceptable.

On est alors obligé de prévoir des caches, ou enjoliveurs, venant obturer spécifiquement chacun des espaces restant apparents après le montage du rail. Cette opération est complexe, puisqu'elle suppose plusieurs éléments, devant être rapportés chacun indépendamment, et donc coûteuse. Elle est en outre parfois malaisée, du fait de l'existence de jeux qui peuvent empêcher le montage d'un enjoliveur, ou présenter un défaut de raccordement avec le reste de la garniture intérieure du véhicule.

L'invention a notamment pour objectif de pallier ces inconvénients de l'art antérieur.

Plus précisément, un objectif de l'invention est de fournir une technique permettant de dissimuler efficacement et simplement un rail de guidage d'un store pour véhicule automobile.

Un autre objectif de l'invention est de fournir une telle technique, tenant compte des jeux de construction, et permettant donc d'accepter certains écarts de montage.

L'invention a également pour objectif de fournir une telle technique, permettant d'optimiser la finition du véhicule, de façon très simple.

Encore un autre objectif de l'invention est de fournir une telle technique présentant un coût de fabrication et de montage limité.

Ces objectifs ainsi que d'autres qui apparaîtront par la suite, sont atteints à l'aide d'un joint de finition pour rail de store pour véhicule automobile, comprenant au moins une lèvre souple venant fermer au moins en partie une ouverture d'un premier logement dudit rail, dans lequel circule au moins un élément solidaire d'une barre de tirage dudit store.

Ainsi, on dispose d'une solution simple et efficace pour dissimuler le rail, qui est facile à mettre en place, et s'adapte efficacement aux jeux fonctionnels.

De façon préférentielle, ledit joint comprend au moins une portion de finition dudit rail, venant au contact ou à proximité d'un élément intérieur dudit véhicule.

Avantageusement, l'extrémité libre de ladite lèvre pénètre à l'intérieur dudit premier logement ou s'engage sous un élément de garniture monté à proximité dudit premier logement.

Selon un mode de réalisation préférentiel de l'invention, le joint de finition est fixé sur un élément de garniture annexe dudit véhicule, sur un élément de tôle de la structure dudit véhicule et/ou sur ledit rail.

Dans ce cas, ledit joint présente avantageusement une portion de clipage, prévue pour s'inscrire dans un second logement correspondant ménagé dans ledit rail.

Ledit second logement peut notamment s'étendre parallèlement au dit premier logement.

De façon préférentielle, ledit second logement et/ou ladite portion de clipage présentent des éléments d'accrochage l'un à l'autre.

Selon une autre caractéristique avantageuse de l'invention, le joint de finition comprend au moins un élément de finition d'extrémité, destiné à dissimuler au moins en partie l'espace entre ledit rail et au moins un élément de garniture dudit véhicule.

Ainsi, dans le cas d'un store de lunette arrière, le joint peut avantageusement comprendre un élément de finition de garniture de pavillon, s'étendant au voisinage de la partie supérieure dudit rail, et/ou un élément de finition d'arrière de custode, s'étendant au voisinage de la partie inférieure dudit rail, dans le cas d'un store de lunette arrière.

Selon une première technique, le ou lesdits éléments de finition d'extrémité peuvent être injectés avec l'ensemble dudit joint.

Selon une seconde technique, le ou lesdits éléments de finition d'extrémité sont surmoulés sur une partie principale comprenant ladite lèvre et s'étendant sensiblement sur toute la longueur dudit rail.

De façon avantageuse, ledit joint de finition est au moins en partie revêtu d'un revêtement assorti avec la garniture intérieure dudit véhicule. Ce revêtement peut être un tissu, et par exemple celui utilisé pour le reste de la garniture intérieur du véhicule.

Ainsi, ledit revêtement s'étend avantageusement au moins en partie sur au moins un des éléments appartenant au groupe comprenant :
- ladite lèvre souple ;
- ladite portion de finition dudit rail ;
- élément de finition de garniture de pavillon ;
- ledit élément de finition d'arrière de custode.

L'invention concerne également les ensembles de store pour véhicule automobile, comprenant un store présentant un écran mobile entraîné par une barre de tirage guidée à ses extrémités par des éléments coulissants dans des rails de guidage, ainsi que, pour chacun desdits rails de guidage, un joint de finition tel que décrit ci-dessus.

L'invention concerne encore les véhicules automobiles comprenant un store présentant un écran mobile entraîné par une barre de tirage guidée à ses extrémités par des éléments coulissants dans des rails de guidage, et, pour chacun desdits rails de guidage, un joint de finition tel que décrit ci-dessus.

D'autres caractéristiques et avantages de l'invention apparaîtront à la lecture de la description suivante d'un mode de réalisation préférentiel de l'invention, donnés à titre de simple exemple illustratif et non limitatif, et de donnée annexés parmi lesquels :
- la figures 1A et 1B illustrent un exemple de store, en l'occurrence destiné à équiper une vitre arrière de véhicule, auquel peut s'appliquer l'invention ;
- la figure 2 est une vue d'un mode de réalisation d'un joint de finition selon l'invention ;
- la figure 3 est une vue en coupe d'un rail de guidage équipé du joint de la figure 2.

L'invention concerne donc les rails de guidage de store, et plus précisément le masquage de ces derniers, après leur montage dans un véhicule. L'invention peut donc s'appliquer dans tous les cas où un store est mis en oeuvre dans un véhicule, dès lors qu'il est prévu que celui-ci soit entraîné par une barre de tirage circulant dans des rails (que ceux-ci soient parallèles ou non, rectilignes ou galbés,...). Ils peuvent donc équiper par exemple une vitre arrière, ou une vitre latérale, un pavillon, une malle arrière,...

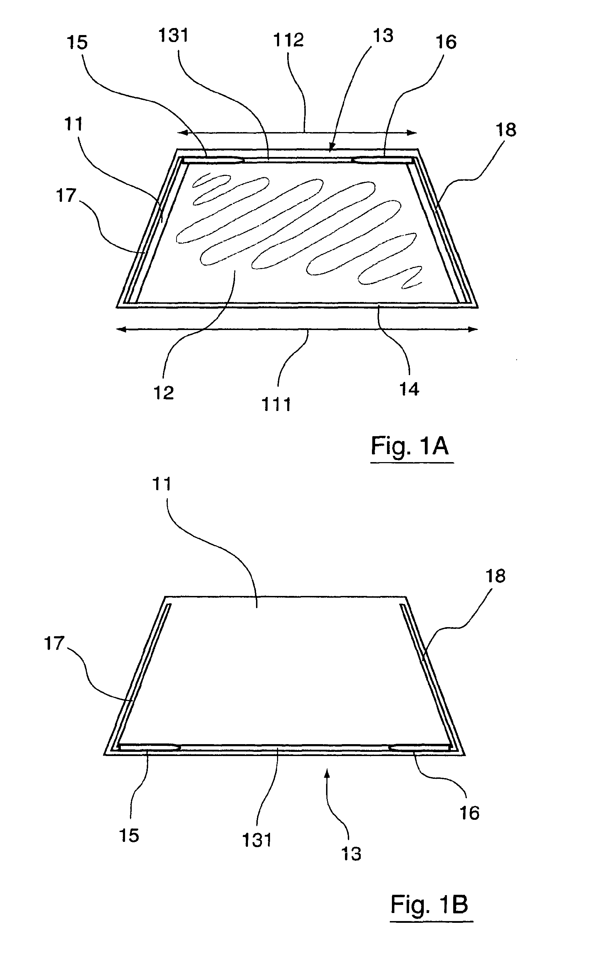

Dans le mode de réalisation décrit ci-après, à titre d'exemple, à l'aide des figures 1A et 1B, le store est destiné à équiper une vitre arrière de forme trapézoïdale, le côté inférieur 111 étant de largeur supérieure à la largeur du côté supérieur 112.

Pour occulter de façon optimale cette surface vitrée trapézoïdale, la toile 12 doit bien sûr avoir une forme une forme similaire. Cela suppose que la barre de tirage est d'une longueur correspondant à celle du petit côté du trapèze définie par la toile, alors que la fente 14 permettant le passage de la toile sous la tablette arrière doit avoir une longueur correspondant à la largeur du grand côté de ce trapèze.

La barre de tirage 13 est solidaire de patins circulant dans des rails 17, 18 montés sur la structure et/ou la garniture du véhicule. Ces rails 17 et 18 suivent également la forme trapézoïdale de la vitre, et ne sont donc pas parallèles. La variation d'écartement entre ces rails est compensée, de façon connue, par l'utilisation d'éléments d'extrémité coulissants, pour former une barre télescopique.

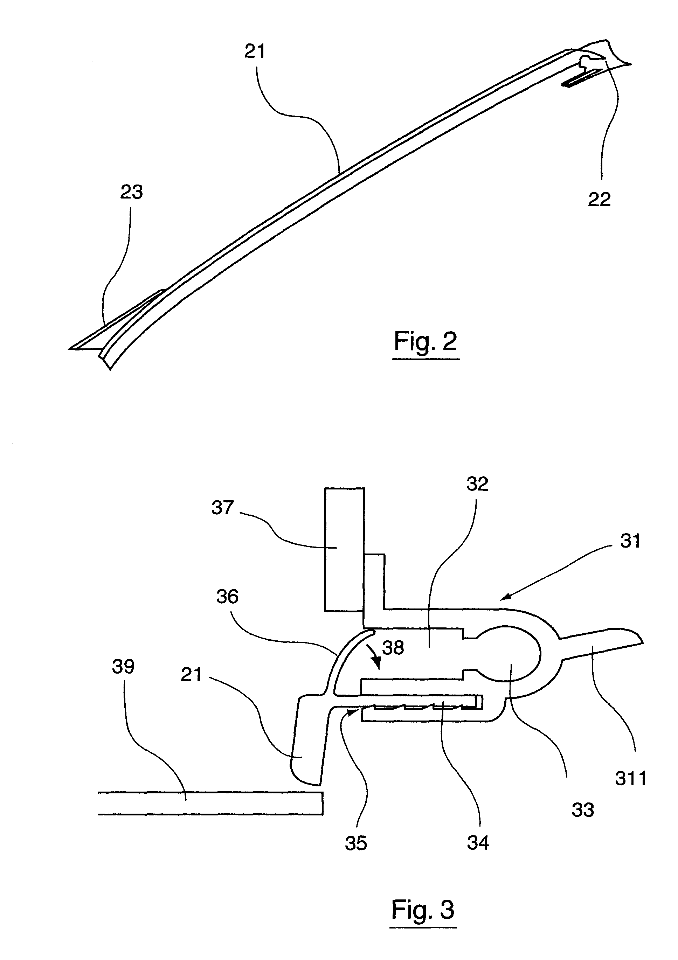

Comme on peut le voir sur la figure 3, le rail 31 présente une portion de fixation 311, qui s'étend sensiblement à l'opposé de l'ouverture du rail, et dont la forme est choisie pour venir en contact avec un élément de tôle de la structure de véhicule, auquel il sera solidarisé.

La forme et l'orientation de cette portion de fixation sont bien sûr adaptées en fonction des besoins, de la forme et de l'emplacement de la tôle, et des diverses contraintes imposées par le véhicule.

Ce rail comprend un premier logement 32 de section essentiellement rectangulaire, dans lequel circule le patin, et une portion 33 de section essentiellement circulaire destinée à recevoir le câble d'actionnement du patin.

Selon l'invention, on prévoit un joint de finition, destiné à masquer les rails du store. Un exemple d'un tel joint de finition est illustré en figure 2.

Ce joint est constitué notamment de :
- une finition principale 21, dite finition de rail réalisée au moins en partie, en matière souple et qui peut être entièrement ou en partie de tissu, ou d'un autre revêtement adapté au reste de la garniture intérieure du véhicule ;
- une finition de garniture de pavillon 22 (ou de fin de course de rail) qui peut être injectée avec la finition de rail 21, ou surmoulée. Cette finition de garniture de pavillon 22 peut également être revêtue entièrement ou en partie de tissu ou d'un autre revêtement ;
- une finition d'arrière custode 23, qui peut également être injectée avec la finition de rail 21 ou surmoulée. Celle-ci peut également être revêtue entièrement ou en partie de tissu ou d'un autre revêtement.

Ce joint peut être solidarisé au rail préalablement sur le véhicule selon différentes techniques, et par exemple être fixé selon la garniture annexe, sur la tôle de la structure de véhicule ou sur le rail.

Selon une technique préférentielle, notamment dans le cas où le joint intègre également la finition du pavillon 22 et/ou de la partie arrière de custode 23, le joint est clipé sur le rail, après mise en place de l'ensemble des garnitures environnantes (le rail étant fixé préalablement à la structure du véhicule).

La figure 3 illustre, en coupe, le principe d'un tel montage. Le joint comprend, sur au moins une partie de sa longueur, une portion de clipage 34, prévue pour pénétrer dans un logement correspondant 35 formé dans le rail 31. Avantageusement, ce logement 35 (qui s'étend parallèlement au logement 32 dans lequel circulent les patins de guidage) et/ou la portion de clipage 34 présentent des dents d'accrochage, ou des moyens fonctionnellement similaires, permettant de solidariser de façon fiable et efficace, le joint sur le rail.

Le joint présente par ailleurs une lèvre 36, venant obturer le logement 32. Cette lèvre 36 rentre à l'intérieur du rail (plus précisément du logement 32) ou vient au moins en contact avec le bord de la garniture 37 de la paroi latérale du véhicule. Au passage du patin du store, la lèvre 36 de déplace vers l'autre côté du rail (flèche 38) et revient ensuite en place, du fait de la souplesse de la matière.

L'autre côté 21 du joint assure la fonction de finition du rail en venant en contact (ou presque de façon à conserver un jeu fonctionnel) avec la lunette arrière 39.

Cette technique permet d'améliorer fortement l'esthétique du véhicule. Notamment, le bord de la lèvre n'est pas visible et il n'y a donc pas de problème de frisure, ni de problème de jeux fonctionnels précis avec la garniture.

Par ailleurs, cette technique permet un montage facile, notamment dans le cas où une seule pièce permet de réaliser l'ensemble de la finition, en intégrant les finitions arrières de custode et de garniture de pavillon, qui dissimulent les ouvertures ou les espaces restant ouverts entre les autres éléments de garniture du véhicule.

Cette technique permet également un montage plus simple, du fait qu'il n'y a pas besoin de symétriser la lèvre.

On notera que le système illustré par la figure 3 peut être inversé, de façon que la lèvre s'étende de haut en bas, et non plus de bas en haut.

## Revendications

1. Joint de finition pour rail de store pour véhicule automobile, comprenant au moins une lèvre souple venant fermer au moins en partie une ouverture d'un premier logement dudit rail, dans lequel circule au moins un élément solidaire d'une barre de tirage dudit store.

2. Joint de finition selon la revendication 1, **caractérisé en ce que** ledit joint comprend au moins une portion de finition dudit rail, venant au contact ou à proximité d'un élément intérieur dudit véhicule.

3. Joint de finition selon l'une quelconque des revendications 1 et 2, **caractérisé en ce que** l'extrémité libre de ladite lèvre pénètre à l'intérieur dudit premier logement ou s'engage sous un élément de garniture monté à proximité dudit premier logement.

4. Joint de finition selon l'une quelconque des revendications 1 à 3, **caractérisé en ce qu'**il est fixé sur un élément de garniture annexe dudit véhicule, sur un élément de tôle de la structure dudit véhicule et/ou sur ledit rail.

5. Joint de finition selon la revendication 4, **caractérisé en ce qu'**il présente une portion de clipage, prévue pour s'inscrire dans un second logement correspondant ménagé dans ledit rail.

6. Joint de finition selon la revendication 5, **caractérisé en ce que** ledit second logement s'étend parallèlement au dit premier logement.

7. Joint de finition selon l'une quelconque des revendications 5 et 6, **caractérisé en ce que** ledit second logement et/ou ladite portion de clipage présentent des éléments d'accrochage l'un à l'autre.

8. Joint de finition selon l'une quelconque des revendications 1 à 7, **caractérisé en ce qu'**il comprend au moins un élément de finition d'extrémité, destiné à dissimuler au moins en partie l'espace entre ledit rail et au moins un élément de garniture dudit véhicule.

9. Joint de finition selon la revendication 8, **caractérisé en ce qu'**il comprend un élément de finition de garniture de pavillon, s'étendant au voisinage de la partie supérieure dudit rail, dans le cas d'un store de lunette arrière.

10. Joint de finition selon l'une quelconque des revendications 8 et 9, **caractérisé en ce qu'**il comprend un élément de finition d'arrière de custode, s'étendant au voisinage de la partie inférieure dudit rail, dans le cas d'un store de lunette arrière.

11. Joint de finition selon l'une quelconque des revendications 8 à 10, **caractérisé en ce que** le ou lesdits éléments de finition d'extrémité sont injectés avec l'ensemble dudit joint.

12. Joint de finition selon l'une quelconque des revendications 8 à 10, **caractérisé en ce que** le ou lesdits éléments de finition d'extrémité sont surmoulés sur une partie principale comprenant ladite lèvre et s'étendant sensiblement sur toute la longueur dudit rail.

13. Joint de finition selon l'une quelconque des revendications 1 à 12, **caractérisé en ce qu'**il est au moins en partie revêtu d'un revêtement assorti avec la garniture intérieure dudit véhicule.

14. Joint de finition selon la revendication 13, **caractérisé en ce que** ledit revêtement est un tissu.

15. Joint de finition selon l'une quelconque des revendications 13 et 14, **caractérisé en ce que** ledit revêtement s'étend au moins en partie sur au moins un des éléments appartenant au groupe comprenant :
- ladite lèvre souple ;
- ladite portion de finition dudit rail ;
- élément de finition de garniture de pavillon ;
- ledit élément de finition d'arrière de custode.

16. Ensemble de store pour véhicule automobile, comprenant un store présentant un écran mobile entraîné par une barre de tirage guidée à ses extrémités par des éléments coulissants dans des rails de guidage, **caractérisé en ce qu'**il comprend, pour chacun desdits rails de guidage, joint de finition comprenant au moins une lèvre souple venant fermer au moins en partie une ouverture d'un premier logement dudit rail, dans lequel circule au moins un élément solidaire d'une barre de tirage dudit store.

17. Véhicule automobile comprenant un store présentant un écran mobile entraîné par une barre de tirage guidée à ses extrémités par des éléments coulissants dans des rails de guidage, **caractérisé en ce qu'**il comprend, pour chacun desdits rails de guidage, joint de finition comprenant au moins une lèvre souple venant fermer au moins en partie une ouverture d'un premier logement dudit rail, dans lequel circule au moins un élément solidaire d'une barre de tirage dudit store.
